Europäisches Patentamt

European Patent Office

Office européen des brevets

(19)

(11) Veröffentlichungsnummer: **0 102 447**

**A1**

(12) # EUROPÄISCHE PATENTANMELDUNG

(21) Anmeldenummer: 83103603.3

(22) Anmeldetag: 14.04.83

(51) Int. Cl.³: **G 11 B 23/04**
**G 11 B 27/34**

(30) Priorität: 28.07.82 DE 3228122

(43) Veröffentlichungstag der Anmeldung:
14.03.84 Patentblatt 84/11

(84) Benannte Vertragsstaaten:
AT BE CH DE FR GB IT LI

(71) Anmelder: GRUNDIG E.M.V. Elektro-Mechanische
Versuchsanstalt Max Grundig & Co. KG.
Kurgartenstrasse 37
D-8510 Fürth(DE)

(72) Erfinder: Gelke, Klaus
Rennbahnstrasse 20
D-8500 Nürnberg 60(DE)

(54) **Magnetband-kleinkassette für Diktiergeräte.**

(57) Die Erfindung betrifft eine Magnetband-Kleinkassette (1) für Diktiergeräte, die in Verbindung mit einer ersten, sich längs auf dem Kassettenoberteil (18) erstreckenden Skalenanzeigeeinrichtung (6) zur Erfassung der Gesamt-Diktatlänge, eine zweite Korrektur-Feinanzeigeeinrichtung (14,15) aufweist, die der genauen Erfassung von nur wenigen Worten dient.

FIG. 1

EP 0 102 447 A1

Croydon Printing Company Ltd

# MAGNETBAND-KLEINKASSETTE FÜR DIKTIERGERÄTE

## BESCHREIBUNG

Die Erfindung betrifft eine Magnetband-Kleinkassette für Diktiergeräte mit zwei nebeneinander angeordneten Spulen, mit einseitigen Öffnungen für den Antrieb der Spulenkerne und des Magnetbandes (Tonwellenantrieb) sowie für das stirnseitige Eintauchen eines Magnetkopfes und einer Bandandruckrolle, und daß über eine von einem der beiden Spulenkerne angetriebene Gewindespindel ein Zeiger längs einer linear ausgedehnten Skala bewegt wird.

Bei Kassetten für Diktiergeräte ist es wünschenswert, daß die Kassette eine Kennzeichnungsmöglichkeit für die auf die Kassette aufgesprochenen Diktate aufweist. Hierfür ist in einer bekannten Ausführung der Kassette ein Bandlängenzähler zugeordnet, der einen Aufschluß über die gesamte besprochene Bandlänge ergibt. Selbst Kleinkassetten für Diktiergeräte ermöglichen eine Laufzeit bis zu 30 Minuten und mehr. Da die Kassetten jedoch

Abmessungen aufweisen, die nur wenige Zentimeter betragen, steht für die Kennzeichnungsmöglichkeit der Diktatlänge auch nur eine geringe Anzeigefläche zur Verfügung. Eine geringe Anzeigefläche, insbesondere bei einer linear sich erstreckenden Skala, bedeutet eine grobe Anzeige. Wünschenswert ist jedoch, daß zusätzlich zu einer relativ groben, die Gesamtlänge eines Diktats erfassende Anzeige, eine differenzierte Anzeige möglich ist, die auch einen sehr kurzen Bandabschnitt innerhalb eines Diktats erfaßt. Bei der Korrektur eines aufgesprochenen Wortes oder nur einer Wortsilbe bzw. einer Zahl ist eine genaue Silbenindikation erforderlich, um beim Übersprechen der zu korrigierenden Silbe kein anderes, nicht zu veränderndes Wortteil zu übersprechen oder zu löschen. Einrichtungen, die in diesem Sinne zu verwenden sind, finden zwar in aufwendiger technischer Ausführung in den Aufzeichnungsgeräten selbst Anwendung, nicht jedoch in Kombination mit einer Langzeitanzeige in den einzelnen Kassetten Meist sind auch die Anzeigeeinrichtungen in den Geräten nicht im Sinne einer Silbenkorrekturmöglichkeit geeignet.

Der Erfindung liegt daher die Aufgabe zugrunde, eine Magnetband-Kleinkassette zu schaffen, der eine Anzeigeeinrichtung sowohl für die Erfassung der Einzel- und Gesamtdiktatzeit, als auch die Erfassung von silbengenauen Bandabschnitten dienlich ist.

Diese Aufgabe ist bei einer Magnetband-Kleinkassette für Diktiergeräte der im Oberbegriff des Anspruchs 1 definierten Gattung gemäß der Erfindung durch die Merkmale des Anspruchs 1 gelöst.

Der Vorteil der erfindungsgemäßen Kleinkassette mit silbengenauer Indikationsmöglichkeit ist naheliegend, da nur an der Kassette selbst die exakte Erfassung von kleinen Bandabschnitten möglich ist, ohne die Abweichungen durch mehrere mechanische Übertragungselemente in Kauf nehmen zu müssen, die dann gegeben sind, wenn die Indikation dem Gerät zugeordnet ist. Ein besonderer Vorteil einer Anzeige, die an beiden Spulenseiten der Kassette vorgesehen ist, liegt ferner darin, daß durch die meist unterschiedlichen Drehzahlen der beiden Spulenkerne bedingt, die bestmöglich erkennbare Anzeigeseite ausgewählt werden kann.

Die Erfindung wird im folgenden anhand der Zeichnungen näher erläutert:

Fig. 1          ist eine Draufsicht auf eine Kleinkassette für Diktiergeräte mit einer
                groben längs sich erstreckenden
                Skalenanzeigeeinrichtung zur Fixierung der Diktatlänge und einer
                Fein-Anzeigeeinrichtung für die Erkennung kurzer Bandabschnitte,

Fig. 2 und 3    ist eine Draufsicht auf eine Kas-
                sette ähnlich der Fig. 1, jedoch mit jeweils veränderter Ausgestaltung der
Fein-Anzeigeeinrichtung.

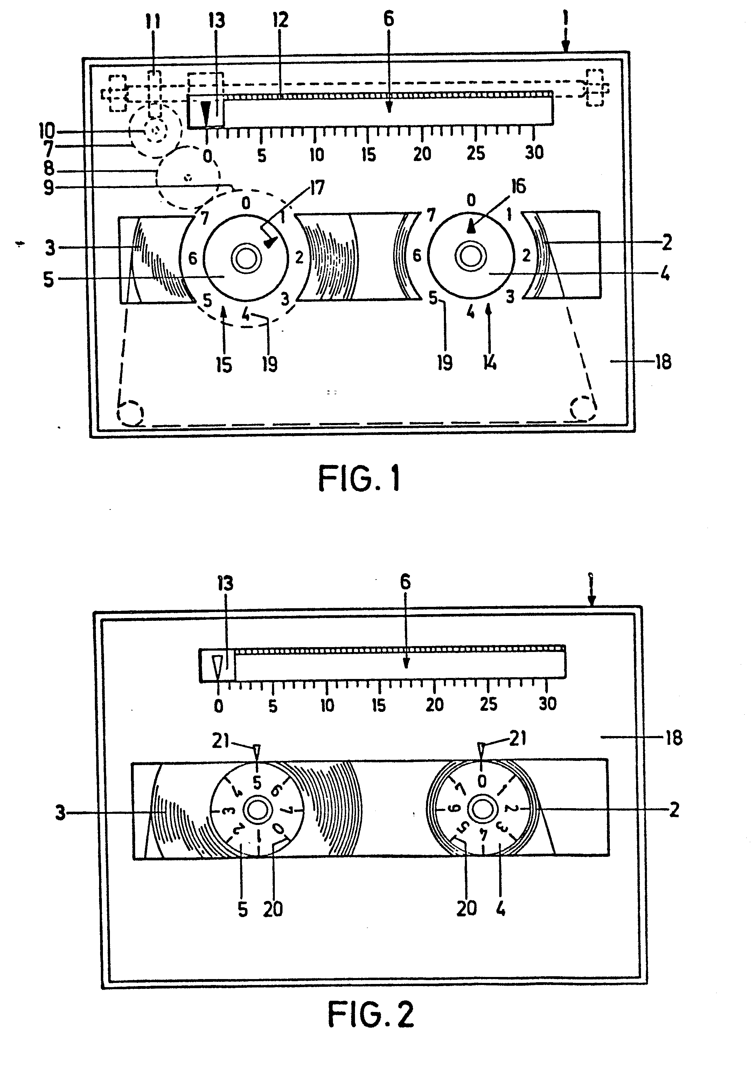

Fig. 1 zeigt eine Magnetband-Kleinkassette 1 zur Verwendung in Diktiergeräten, bei der die beiden Magnetbandspulen 2 und 3 nebeneinander angeordnet sind. Nach Einlegen der Kleinkassette in ein Diktiergerät werden die Spulenkerne 4 und 5 von Mitnahmedorne des Gerätes erfaßt und angetrieben. Der Bandantrieb erfolgt über eine Capstanwelle, die in die Kleinkassette eintaucht. Ebenso taucht stirnseitig ein Tonkopf und eine Bandandruckrolle in an der Kassette vorgesehene Öffnungen ein. Der Antrieb für die sich über eine Längsseite der Kassette erstreckende Skalenanzeigeeinrichtung 6 erfolgt über einen der beiden Spulenkerne. Ein Zahnradtrieb 7, 8, der z. B. vom linken Spulenkern 5 angetrieben wird, und der einen Zahnkranz 9 aufweist, treibt über ein Ritzel 10 ein Stirnrad 11 an, das auf einer Gewindespindel 12 aufgesetzt ist, die eine nichtlineare Steigung aufweist. Die Gewindespindel bewegt ihrerseits einen Schlitten 13, der mit einer Markierung versehen ist. Im Bereich der Spulenkerne befindet sich eine zweite Fein-Anzeigeeinrichtung 14 und 15. Eine Zeigermarkierung 16 und 17 der zweiten Anzeigeeinrichtung befindet sich jeweils auf dem Spulenkern 4 und 5. Auf dem Kassettenoberteil (18), das die sich längs erstreckende lineare Skala trägt, befinden sich um den Spulenkern kreisförmig angeordnete Markierungen 19. Die Markierungen können als Striche oder direkt, wie dargestellt, als Zahlen ausgebildet und einem auch die Längsskala erfassenden Aufkleber zugeordnet sein. Im Bereich der linearen Skalenanzeigeeinrichtung 6 und der zweiten Fein-Anzeigeeinrichtung 14 befindet sich jeweils im Kassettenoberteil 18 eine abgedeckte, fensterartige Öffnung.

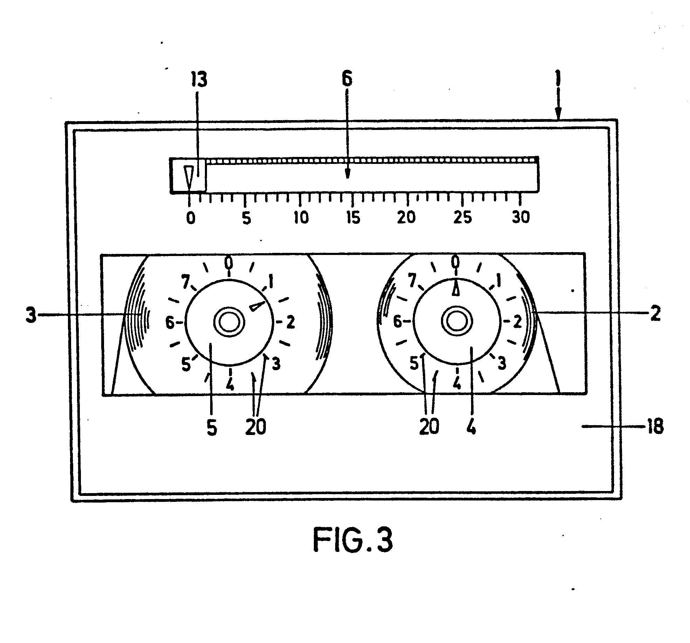

In den Figuren 2 und 3 sind weitere Beispiele für die Markierungsmöglichkeit der Fein-Anzeigeeinrichtung 14, 15 an Kleinkassetten für Diktiergeräte dargestellt. So sind in der Fig. 2 schmale Teilungsstriche 20 auf den Spulenkernen 4 und 5 angeordnet. Eine feststehende Nullstellenmarkierung 21 befindet sich auf dem Kassettenoberteil 18. Ein weiteres Beispiel für eine vorteilhafte Ausgestaltung der Fein-Anzeigeeinrichtung ist nach Fig. 3 dadurch gegeben, daß die auf dem Kassettenoberteil angebrachten Teilungsstriche 20 auf verschiedenen Kreisbahnen radial zum Spulenkern versetzt angeordnet sind.

-7-

# MAGNETBAND-KLEINKASSETTE FÜR DIKTIERGERÄTE

## PATENTANSPRÜCHE

1. Magnetband-Kleinkassette für Diktiergeräte mit zwei nebeneinander angeordneten Spulen, mit einseitigen Öffnungen für den Antrieb der Spulenkerne und des Magnetbandes (Tonwellenantrieb) sowie für das stirnseitige Eintauchen eines Magnetkopfes und einer Bandandruckrolle, und daß über eine von einem der beiden Spulenkerne angetriebene Gewindespindel ein Zeiger längs einer linear ausgedehnten Skala bewegt wird, d a d u r c h  g e k e n n z e i c h n e t , daß in Kombination mit der ersten Skalenanzeigeeinrichtung (6) eine zweite Fein-Anzeigeeinrichtung (14) angebracht ist, die an beiden Spulenkernen (4, 5) Markierungen aufweist, und die im Zusammenwirken mit weiteren Markierungen auf dem die lineare Skala tragenden Kassettenoberteil nur eine geringe Bandlänge anzeigt.

2. Magnetbandkassette nach Anspruch 1, d a d u r c h  g e k e n n z e i c h n e t , daß das Kassettenoberteil (18) mindestens im Bereich der Skalenanzeigeeinrichtung (6) und der Spulenkerne (4,5) fensterartige Öffnungen aufweist.

3. Magnetbandkassette nach Anspruch 1 und 2, d a d u r c h  g e k e n n z e i c h n e t , daß die fensterartigen Öffnungen mittels durchsichtigem Kunststoff abgedeckt sind.

4. Magnetbandkassette nach den Ansprüchen 1 bis 3, d a d u r c h  g e k e n n z e i c h n e t , daß die Markierung auf dem Spulenkern (4, 5) aus einem oder mehreren Teilstrichen besteht, und daß das Kassettenoberteil (18) wenigstens eine Bezugsmarkierung aufweist.

5. Magnetbandkassette nach den Ansprüchen 1 bis 4, d a d u r c h  g e k e n n z e i c h n e t , daß die Markierung auf dem Kassettenoberteil radial zum Spulenkern eine beliebige Anzahl von Teilstrichen aufweist.

6. Magnetbandkassette nach den Ansprüchen 1 bis 5, d a d u r c h  g e k e n n z e i c h n e t , daß die radial zum Spulenkern angebrachten Teilstriche verschiedenen Kreisbahnen zugeordnet und zueinander versetzt angeordnet sind.

- 3 -                    Beschreibung:

FIG. 1

FIG. 2

0102447
Reg. 1878

FIG.3

0102447

Nummer der Anmeldung

EP 83 10 3603

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 151 514 (VIKTOR STUZZI) * Ansprüche 4, 6; Seite 5, Zeilen 19-31; Figur 1 * | 1-3 | G 11 B 23/04 G 11 B 27/34 |
| Y | US-A-3 705 699 (I. SILLER) * Ansprüche 1, 2, 7; Figuren 7, 8 * | 1-3 | |
| A | DE-A-2 830 464 (STUZZI) * Seite 8; Zeilen 12-22; Figur 2 * | 1 | |
| A | DE-A-2 808 861 (R. GRIEBEL) * Seite 5, Zeilen 20-31 * | 1 | |
| A | US-A-3 476 894 (E. PLESS) | | |

RECHERCHIERTE SACHGEBIETE (Int Cl 3)

G 11 B 23/00
G 11 B 27/34

Der vorliegende Recherchenbericht wurde für alle Patentansprüche erstellt.

| Recherchenort | Abschlußdatum der Recherche | Prüfer |
|---|---|---|
| BERLIN | 13-10-1983 | ROGNONI M.G.L. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82